# EUROPEAN PATENT SPECIFICATION

(11) **EP 3 408 150 B1**
(45) Date of publication and mention of the grant of the patent: **17.05.2023**
(21) Application number: 17707990.2
(22) Date of filing: 27.01.2017
(51) Int. Cl.: B60T 17/08, B60T 13/26

(54) **AN INTERNAL VENTILATED DIAPHRAGM-PISTON SPRING BRAKE ACTUATOR**
MEMBRAN-KOLBENFEDERBREMSAKTUATOR MIT INNENBELÜFTUNG
ACTIONNEUR DE FREIN À RESSORT À PISTON-DIAPHRAGME VENTILÉ INTERNE

(30) Priority: 03.03.2016 TR 201602804
(43) Date of publication of application: 05.12.2018
(73) Proprietor: Arfesan Arkan Fren Elemanlari Sanayi Ve Ticaret Anonim Sirketi, Kocaeli (TR)
(72) Inventor: ARKAN, Fuat Burtan, Kocaeli (TR); BATTAL, Yavuz, Kocaeli (TR); KULAC, Omer Faruk, Kocaeli (TR)
(74) Representative: Yalçiner Patent and Consulting Ltd.
(86) International application number: PCT/TR2017/050041
(87) International publication number: WO 2017/151077

(56) References cited:
- EP-A1- 2 662 254
- EP-A1- 2 711 258
- WO-A1-01/68429
- WO-A1-95/12748
- WO-A1-2015/122860
- WO-A1-2015/122861
- WO-A2-2009/085024
- WO-A2-2012/164587
- US-A- 4 850 263
- US-A- 5 067 391
- US-A1- 2007 131 498
- US-B1- 7 121 191

## Description

### Technical Field of the Invention

The invention subject to the application is related to an internal ventilated diaphragm-piston spring brake actuator that enables decreasing actuator malfunctions by implementing an internal ventilation system to the diaphragm-piston spring brake actuators used in pneumatic brake systems; further it is related to an assembly/disassembly method of such an actuator.

### Background of the Invention (Prior Art)

The spring brake actuators used in heavy duty commercial vehicles such as trucks, tractors, trailers and busses consist of the service part that is active during normal driving conditions and the spring brake part that engages in case of air leaks or if the air is purged (when handbrake is pulled).

The breather tube in the traditional diaphragm-piston spring brake actuators produced by the current technique today is connected to the sheet metal bodies via the rubber parts called rubber elbows. During the upward motion of the piston, air is sucked from the region with atmospheric pressure through the breather tube in the power spring section. The atmospheric region is connected to the outer environment via the ventilation hole. Along with the air, dust and moisture can also easily enter in through this ventilation hole. By the downward motion of the piston, dust and moisture may be conveyed into the power spring section via the breather tube. Especially the moisture may cause corrosion on the power spring and dusts may eventually cause the sealing elements and the guide ring to be damaged. Moreover, the rubber elbows that get dusted are bruised by the atmospheric conditions over time and this causes the joints to become loose. At the same time, it is a common situation that vibration and rocks bouncing from the road damage this joint and causes any one end of the breather tube to be opened up to the atmosphere. When this joint is damaged, water, dust and mud enter into the power spring section and cause the guide ring and sealing elements to get damaged and break the sealing. Moreover, the water and abrasives that enter in may cause premature corrosion and damage on the power spring that is responsible for holding the vehicle in parked position. In this case, the spring brake actuator that has essential importance must be immediately repaired or replaced.

In the patent application No. WO2009085024 of the known state of the art, the internal ventilation system for diaphragm piston spring brake actuators is mentioned. In this internal ventilation system, the pressure built up in the power spring section during the upward motion of the piston is purged to the service chamber through the piston pipe and the internal ventilation plug and the vacuum pressure formed in the power spring section during the downward motion of the piston is balanced by the air sucked from the spring chamber. Said patent application No.WO2009085024 has the below mentioned disadvantages;
- Since the valve is closed in order to prevent air leaks into the power spring section when there is pressure in the spring chamber, the pressure in the spring chamber needs to be purged to open the valve and balance the vacuum when there is a need for power spring section vacuum balancing. Thus, during the braking, the desired vacuum balancing cannot be performed or performed late.
- Since the valve that has the duty of balancing vacuum is irremovably attached to the piston, it is not possible to disassemble it in case of a malfunction.
- Finally, since the connection of the internal ventilation plug and the piston pipe is made by thread connection, it may get loose due to the vibration exposed during operating conditions and the actuator may lose its function.

There is another patent document No. DE10228934 of the known state of the art related to diaphragm-piston internal ventilation system. In this application, the pressure and the vacuum formed in the power spring section is balanced from the service chamber through the same valve by a valve system irremovably integrated to the piston pipe. Said patent application No.DE10228934 has the below mentioned disadvantages;
- Since the valve system is irremovably mounted onto the piston pipe, it cannot be removed when it is desired to remove it in case of a malfuntion or for troubleshooting purposes.
- Since the valve system is mounted on the piston pipe, It is required to form a hole on the internal wall of the piston pipe to valve housing. By the current production methods, this process is hard and costly in a piston produced in one piece.

In order to avoid the abovementioned negative situations, there is a need for a new system related to immediate repair or replacement of the spring brake actuator.

WO 9512748 are some prior art documents disclosing air operated brake actuator systems.

### Brief Description and Objectives of the Invention

The present invention is related to a novel internal ventilated diaphragm-piston spring brake actuator to resolve the abovementioned disadvantages and to bring new advantages to the associated technical field.

The internal ventilated diaphragm-piston spring brake actuator of the invention; the spring brake actuators used in heavy commercial vehicles such as trucks, tractors, trailers and busses consist of a service part that is active during normal driving conditions and an emergency part that engages in case of an air leak or if the air is purged (when handbrake is pulled). In the situations where it is desired to slow down or stop the vehicle the service part works and when it is desired to immobilize the vehicle the emergency part works. In other words, when a force is applied to the foot brake pedal the service part works and when a force is applied to the handbrake the emergency part works. The power spring is compressed by the air sent to the spring chamber. The power spring provides the force required for the braking by being released when the air in the spring chamber is purged.

Thanks to an internal ventilated diaphragm-piston spring brake actuator;
- By balancing the vacuum formed in the power spring section during the upward motion of the piston, it comprises a more rapid and stable vacuum balancing system compared to systems balanced from the spring chamber.
- Since it is mounted on the piston pipe via form dependant fitting operation, the internal ventilation piston pipe plug having a valve system that balances both the pressure and the vacuum formed in the power spring section enables elimination of the problem that the piston pipe plug comes loose from its location and loses its function during operation of the actuator due to vibration which is encountered on the current systems where the piston pipe plug is mounted by threaded joints.
- The internal ventilated piston pipe plug having the valve system mounted on the piston pipe by form dependant fitting operation enables removal of the plug from the tube in case of a malfunction on the valve system, replacement of the broken parts or dismantling and inspecting the plug when a malfunction occurs in the internal ventilation system.

In order to achieve all the objects that are mentioned above and that can be inferred from the detailed description provided below, the present invention comprises; service body (2), service chamber (3), spring body (4), spring chamber (5), piston pipe plug having the valve system (6), piston pipe (7), piston (8), nutring (9), piston guide ring (10), power spring (11), plug body (12), plug body - piston pipe sealing o-ring (13), v-ring groove (14), v-ring (15), adapter plate center guide ring (16), adapter plate center guide ring groove (17), adapter plate center o-ring (18), adapter plate center o-ring groove (19), plug body locking assembly form (20), piston pipe locking assembly form (21), valve systen body large assembly ring (22), valve system body-plug body sealing o-ring (23), piston pipe air channel (24), plug body air channel (25), valve system body (26), valve system body small assembly ring (27), valve system spring (28), valve (29), valve system body air channel (30), valve sealing lip (31), rectangle ring air channel (32), rectangle ring (33), plug body valve system groove (34), valve system body valve groove (35), piston pipe internal volume (36), power spring section (37), adapter plate (38), release bolt (39), right half-bushing (40) and left half-bushing (41).

### Brief Description of the Invention

The figures prepared to better describe an internal ventilated diaphragm-piston spring brake actuator are described below.
FIGURE 1: Cross-section of an internal ventilated diaphragm-piston spring brake actuator and section of the piston pipe plug having the valve system in the v-ring implemented version of the invention.
FIGURE 2: Cross-section of the piston pipe plug having the valve system in the rectangle ring implemented version of an internal ventilated diaphragm-piston spring brake actuator
FIGURE 3: Cross-section of internal ventilated diaphragm-piston spring brake actuator wherein the valve system of an internal ventilated diaphragm-piston spring brake actuator is open.
FIGURE 4: Cross-section of internal ventilated diaphragm-piston spring brake actuator wherein the valve system of an internal ventilated diaphragm-piston spring brake actuator is closed.
FIGURE 5: Dismantling implementation of the piston pipe plug having the valve system of an internal ventilated diaphragm-piston spring brake actuator.

### Description of the Elements/ Components/ Parts Forming the Invention

The elements/components/parts in the figures drawn to better describe the internal ventilated diaphragm-piston spring brake actuator developed by the invention have been individually assigned with reference numbers and these numbers refer to;
- 1.: Internal ventilated diaphragm-piston spring brake actuator
- 2.: Service body
- 3.: Service chamber
- 4.: Spring body
- 5.: Spring chamber
- 6.: Piston pipe plug having the valve system
- 7.: Piston pipe
- 8.: Piston
- 9.: Nutring
- 10.: Piston guide ring
- 11.: Power spring
- 12.: Plug body
- 13.: Plug body - piston pipe sealing o-ring
- 14.: V-ring groove
- 15.: V-ring
- 16.: Adapter plate center guide ring
- 17.: Adapter plate center guide ring groove
- 18.: Adapter plate center o-ring
- 19.: Adapter plate center o-ring groove
- 20.: Plug body locking assembly form
- 21.: Piston pipe locking assembly form
- 22.: Valve systen body large assembly ring
- 23.: Valve system body-plug body sealing o-ring
- 24.: Piston pipe air channel
- 25.: Plug body air channel
- 26.: Valve system body
- 27.: Valve system body small assembly ring
- 28.: Valve system spring
- 29.: Valve
- 30.: Valve system body air channel
- 31.: Valve sealing lip
- 32.: Rectangle ring air channel
- 33.: Rectangle ring
- 34.: Plug body valve system groove
- 35.: Valve system body valve groove
- 36.: Piston pipe internal volume
- 37.: Power spring section
- 38.: Adapter plate
- 39.: Release bolt
- 40.: Right half-bushing
- 41.: Left half-bushing

### Detailed Description of the Invention

In this detailed description, the novelty of the invention is described through non-limiting examples for providing a better understanding of the subject. Accordingly, an internal ventilated diaphragm-piston spring brake actuator (1) that enables decreasing actuator malfunctions by implementing an internal ventilation system to diaphragm-piston spring brake actuators used in pneumatic brake systems and structural members forming the internal ventilated diaphragm-piston spring brake actuator (1) are described.

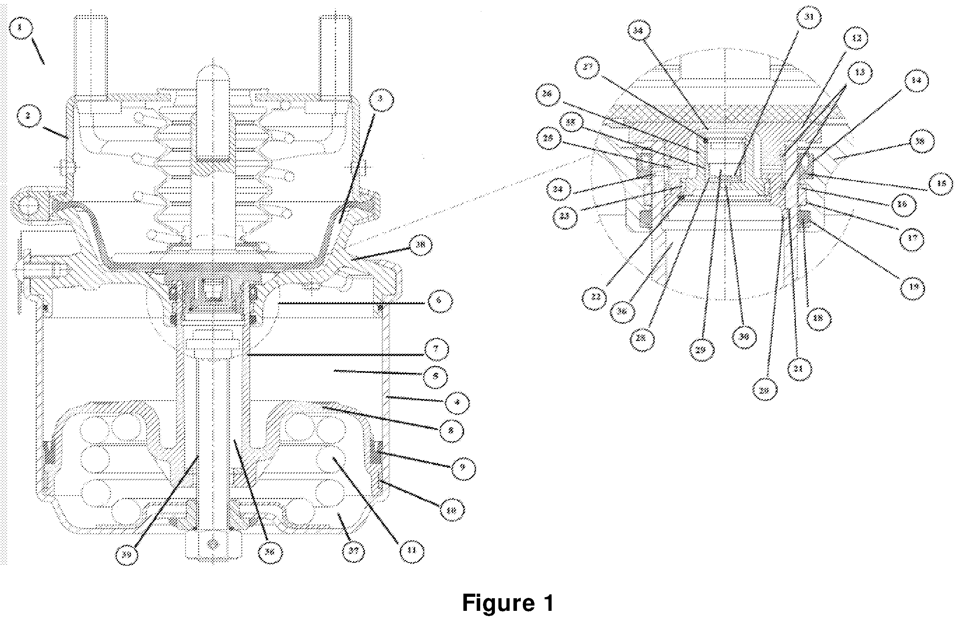

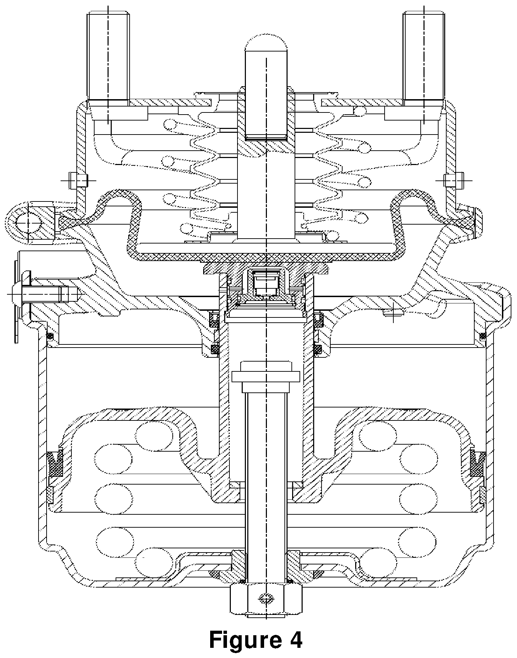

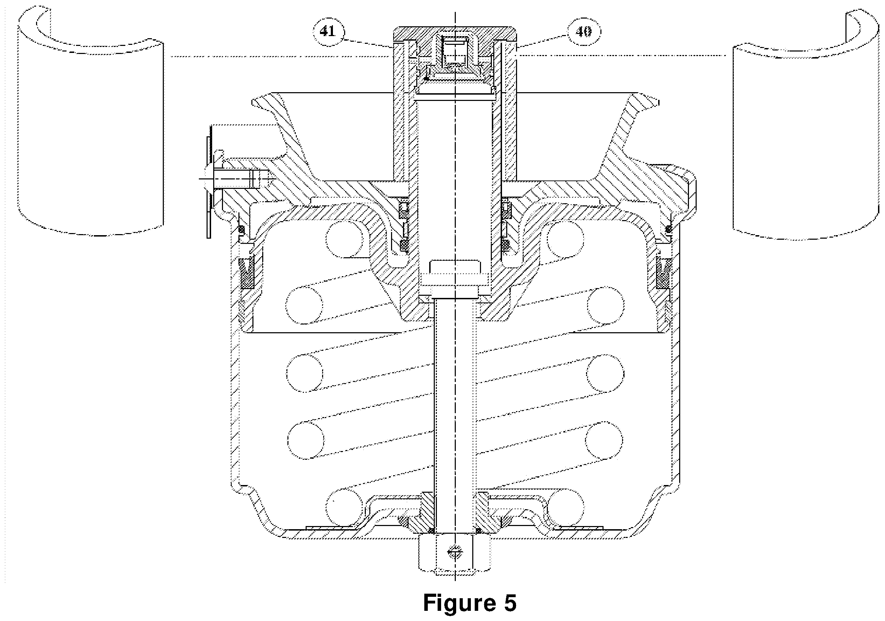

With reference to Figure 1, Figure 2, Figure 3, Figure 4 and Figure 5, views of internal ventilated diaphragm-piston spring brake actuator (1) are provided. The internal ventilated diaphragm-piston spring brake actuator (1) is basically characterized by comprising a piston pipe plug (6) having a valve system with a plug body locking assembly form (20) and a piston pipe (7) having a piston pipe locking assembly form (21).

In view of the information provided above, during operation of the internal ventilated diaphragm-piston spring brake actuator (1), the main component of the internal ventilated system of the invention is the piston pipe plug having a valve system that is designed to balance the vacuum and the pressure formed in the power spring section (37) from the service chamber (3). An internal ventilated diaphragm-piston spring brake actuator (1) of the invention has two different applications. One of them is the v-ring implemented version and the other is the rectangle ring implemented version.

In both of the different implementations, the operation of the system is generally as described below;
When the spring brake actuator (1) is in the driving condition as shown in Figure 1, the spring chamber (5) is filled with pressurized air. The pressurized air provides the force that holds the power spring (11) in the wound up (set) position. In this situation, the piston (8) is at the lowest position. When the driver pulls the handbrake and wants to bring the vehicle to the parking position or when there is a malfuntion in the pneumatic brake system of the vehicle, the pressurized air in the spring chamber (5) is purged. When the pressurized air in the spring chamber (5) is purged, the power spring (11) pushes the piston (8) up and parking brake or emergency brake is actuated. During upward motion of the piston (8), since the volume of the power spring section (37) is increased, a vacuum pressure is formed in the power spring section (37). This vacuum pressure should be balanced to atmospheric pressure for the spring brake actuator (1) to provide the correct braking force during park brake.

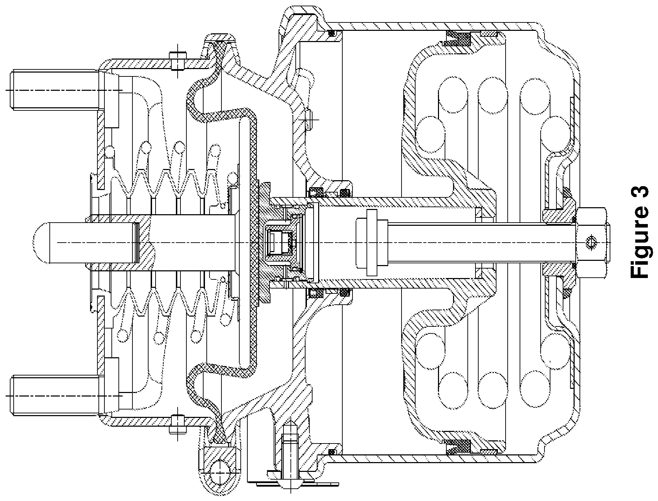

In our invention, this spring brake actuator (37) vacuum balancing procedure is performed as described below;
- Vacuum pressure is formed in the power spring section (37) while the pressurized air in the spring chamber (5) is purged and the piston (8) moves upward,
- The piston moves towards top position (8) (Figure 3)
- The valve system is at open position,
- The atmospheric pressure in the service chamber (3) passes through the service chamber (3), piston pipe air channel (24), plug body air channel (25), plug body valve system groove (34), valve system body valve groove (35), valve system body air channel (30) and piston pipe internal volume (36) respectively and reaches power spring chamber (37) and so the vacuum pressure in the service chamber is balanced with the atmospheric pressure.

When the spring brake actuator (1) is in the park brake position, the spring chamber (5) is at atmospheric pressure and the parking or emergency brake is activated by force of the power spring (11). When it is desired to switch the vehicle to driving position from the parking position, the driver releases the handbrake and the spring chamber (5) starts to fill by pressurized air. When the spring chamber (5) starts to fill by pressurized air and when the pressurized air reaches the force required to wind up the power spring (11), the power spring (11) starts to wind up and the piston (8) starts moving down. The power spring section (37) volume decreases by the downward motion of the piston (8), the air pressure of the power spring section (37) which is initially at atmospheric pressure starts to increase and when the piston (8) moves down and comes to the lowest position (Figure 1) it reaches maximum pressure. During switching of the vehicle from the parking position to driving position, this pressure formed in the power spring section (37) must be purged to wind up the power spring (11) at the calculated and predicted spring chamber (5) air pressure values. In our invention, purging of said pressure formed in the power spring section (37) is performed by the steps described below;
- during movement of the piston from the top position to lowest position (Figure 1) pressure builds up in power spring section.
- the valve system is at open position,
- the pressurized air formed in the power spring section (37) passes through the power spring section (37), piston pipe internal volume (36), valve system body air channel (30), valve system body valve groove (35), plug body valve system groove (34), plug body air channel (25) and piston pipe air channel (24) respectively and discharged to service chamber (3).

When referred to Figure 1, in the v-ring implemented version of the internal ventilated diaphragm-piston spring brake actuator (1) (that is the first implementation), the piston plug (6) that has the valve system comprises of; plug body (12), plug body locking assembly form (20), valve system body air channel (30), valve (29), valve system spring (28), valve systen body large assembly ring (22), plug body-piston pipe sealing o-ring (13), valve system body-plug body sealing o-ring (23), plug body air channel (25), valve system body valve groove (35), valve system body (26), valve system body small assembly ring (27), plug body valve system groove (34) and valve sealing lip (31). In the v-ring implemented version, the adapter plate bearing between the adapter plates (38) and the piston pipe (7) comprises of an o-ring (18), one v-ring (15) and a adapter plate center guide ring (16). In order to realize this bearing, there are v-ring groove (14), adapter plate center guide ring groove (17) and adapter plate center o-ring groove (19) on the adapter plate (38).

In the V ring implemented version of the invention, in order to prevent wearing down of valve system integrated piston pipe plug (6) in the driving position when each time the foot brake pedal is pressed and the valve operates, v-ring (15) is used on piston pipe adapter plate adapter plate bearing. While said vehicle is in driving position and when the service chamber (3) is filled with pressurized air by pressing the foot brake pedal when the piston (8) is at the lowest position, in order to prevent fatigue on the valve system, the piston pipe air channel (24) is positioned between the adapter plate bearing o-ring (18) and v-ring (15) between the adapter plate (38) and the piston pipe (7). Thus, while the vehicle is in the driving position, it is prevented that the pressurized air in the service chamber (3) passes through the piston pipe air channel (24) and operates the valve system and causes it to wear down due to the design of the v-ring (15).

In the V ring implemented version of valve system integrated piston pipe plug (6), while the vehicle is switched from the parking position to service position, during winding up of the power spring (11) by the help of the pressure of the spring chamber (5); after the piston pipe air channel (24) goes between the adapter plate bearing o-ring (18) and the v-ring (15) between the adapter plate (38) and the piston pipe (7), the piston (8) moves slightly more downward.

During this slight downward motion of the piston, a slight pressure increase occurs in the power spring section (37) due to the decrease in volume. The v-ring (15) functions to discharge said pressure. V-ring (15), while allowing flow towards service chamber (3), blocks air flow from the service chamber (3). During discharge of said pressure, the air flow is transmitted to power spring section (37), piston pipe internal volume (36), valve system body air channel (30), valve system body valve groove (35), plug body valve system groove (34), plug body air channel (25), piston pipe air channel (24), v-ring (15) and the service chamber (3), respectively.

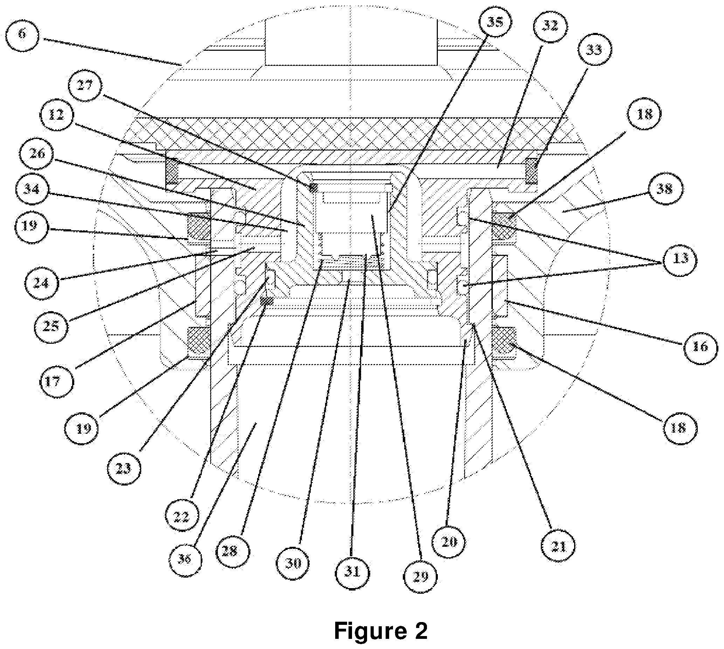

When referred to Figure 2, in the rectangle ring implementation of the internal ventilated diaphragm-piston spring brake actuator (1) which is the second version, valve system integrated piston pipe plug (6) comprises a plug body (12), plug body locking assembly form (20), valve system body air channel (30), valve (29), valve system spring (28), valve systen body large assembly ring (22), plug body-piston pipe sealing o-ring (13), valve system body-plug body sealing o-ring (23), plug body air channel (25), valve system body valve groove (35), valve system body (26), valve system body small assembly ring (27), plug body valve system groove (34) and valve sealing lip (31), rectangle ring air channel (32) and rectangle ring (33). In the rectangle ring implemented version, the adapter plate bearing between the adapter plate (38) and the piston pipe (7) consists of two o-rings (18) and one adapter plate center guide ring (16). In order to perform said bearing on the adapter plate (38), there are adapter plate center guide ring groove (17) and adapter plate center o-ring grooves (19).

In the rectangle ring implemented version of the invention, while the vehicle is in the driving position, two o-rings (18) are used in the piston pipe (7) adapter plate (38) adapter plate bearing of valve system integrated piston pipe plug (6). When the vehicle is in the driving position and the piston (8) is at the lowest position, when the service chamber (3) is filled by pressurized air by pressing the floor brake pedal, in order to prevent fatigue on the valve system, adapter plate bearing between the piston pipe air channel (24) adapter plate (38) and the piston pipe (7) is positioned between two o-rings (18). The rectangle ring (33) on the plug is designed to block the passage of service pressure (3) from the rectangle ring air channel (32) to the valve system. Thus, when the vehicle is in the driving position, it is prevented that the pressurized air in the service chamber (3) passes through the piston pipe air channel (24) or rectangle ring air channel (32) and operates and wears down the valve system.

In the rectangle ring (33) implementation of the invention, valve system integrated piston pipe plug (6), while the vehicle is switched from the parking position to service position, during winding up of the power spring (11) by the help of the pressure of the spring chamber (5); after the piston pipe air channel (24) goes between two o-rings (18) on the adapter plate bearing between the adapter plate (38) and the piston pipe (7), the piston (8) moves slightly more downward. During this slight downward motion of the piston, a slight pressure increase occurs in the power spring section (37) due to the decrease in volume. The rectangle ring (33) functions to discharge said pressure. The rectangle ring (33) part, while allowing air flow from the rectangle ring air channel to service chamber (3), blocks air flow from the service chamber (3) towards the rectangle ring air channel (32). The number of rectangle ring air channels (32) may be one or more than one around the plug body (12). In the rectangle ring version, the discharge of said pressure is performed through the below mentioned air flow path. During discharge of said pressure, the air flow is transmitted to power spring section (37), piston pipe internal volume (36), valve system body air channel (30), valve system body valve groove (35), plug body valve system groove (34), rectangle ring air channel (32), the rectangle ring (33) and the service chamber (3), respectively.

When the vehicle is in the parked position, while switching to driving position, when the foot brake pedal is pressed, while the pressurized air in the spring chamber (5) winding up the power spring (11), the pressure formed in the power spring section (37) cannot be discharged to service chamber (3) due to the pressurized air in the service chamber (3). In the rectangle ring implementation, when the piston pipe air channel (24) enters between the adapter plate bearing two o-rings (18) between the adapter plate (38) and the piston pipe (7) and when the pressurized air in the service chamber (3) is discharged, the pressurized air in the power spring section (37) cannot be discharged through the piston pipe air channel (24). In this case, in order to discharge the pressure formed in the power spring section (37), the rectangle ring (33) and the air flow path given below are used. Power spring section (37), piston pipe internal volume (36), valve system body air channel (30), valve system body valve groove (35), plug body valve system groove (34), rectangle ring air channel (32), rectangle ring (33) and the service chamber (3). In the v-ring version, when the piston pipe air channel (24) enters between adapter plate bearing v-ring (15) and o-ring (18) between the adapter plate (38) and the piston pipe (7), when the pressurized air in the service chamber (3) is discharged, in order to purge said pressure formed in the power spring section (37), the v-ring (15) part functions and the air flow path given below is followed. Power spring section (37), piston pipe internal volume (36), valve system body air channel (30), valve system body valve groove (35), plug body valve system groove (34), plug body air channel (25), piston pipe air channel (24), v-ring (15) and the service chamber (3).

In the v-ring implemented and rectangle ring implemented versions of the internal ventilated diaphragm-piston spring brake actuator (1), the assembly of valve system integrated piston pipe plug (6) onto the piston pipe (7) is performed by the steps given below for both implementations.
- The power spring (11) and the piston (8) is positioned inside the spring body (4),
- The power spring (11) is wound up by the aid of a press,
- The power spring (11) and the piston (8) is fixed at wound up position by the release bolt (39),
- Adapter plate (38) - spring body (4) connection is performed by fixing the adapter plate (38) onto the spring body (4),
- Valve system integrated piston pipe plug (6) is slipped on the piston pipe (7) by the aid of a press,
- The assembly procedure is completed when the plug body locking assembly form (20) sits on the piston pipe locking assembly form (21).

After the assembly procedure is completed, plug body-piston pipe sealing o-rings (13) ensure sealing between the plug body (12) and the piston pipe (7) by being compressed between the plug body (12) and the piston pipe (7).

In the v-ring implemented and rectangle ring implemented versions of the internal ventilated diaphragm-piston spring brake actuator (1) when it is desired to replace the broken piston plug (6) having the valve system or when it is desired to disassemble and inspect it, the disassembly procedure is performed by the steps given below.
- The service body (2) is removed,
- While the piston (8) is at top position when the pressurized air in the spring chamber (5) is purged, vertically cut right and left bushings (40, 41) are placed on the adapter plate (38) such that they surround the piston pipe (7),
- The piston (8) is moved downward by supplying pressurized air into the spring chamber (5).
- By the reverse impulse force of the pressurized air on the piston (8) and by the reaction force of the right and left bushings (40, 41) on the piston pipe plug (6) towards disassembly direction, the plug body locking assembly form (20) is released from the piston pipe locking assembly form (21) and disassembly of the piston plug (6) is completed.

## Claims

1. An internal ventilated diaphragm-piston spring brake actuator (1), implementing internal ventilation system to diaphragm-piston spring brake actuators used in pneumatic brake systems, comprising a piston pipe (7) having piston pipe locking assembly form (21) and piston pipe plug (6) having valve system with plug body locking assembly form (20) wherein said piston pipe plug (6) comprises a rectangle ring (33) on it and having a valve system structured to balance vacuum and pressure formed in the power spring section (37) by service chamber (3) **characterized in that**
the piston pipe plug (6) is mounted on the piston pipe (7) with a plug body (12) connected to the plug body locking assembly form (20) and the piston pipe locking assembly form (21) by form dependant fitting operation.

2. An internal ventilated diaphragm-piston spring brake actuator (1) according to Claim 1, **characterized in that** the piston pipe plug (6) having the valve system comprises of plug body (12), plug body locking assembly form (20), valve system body air channel (30), valve (29), valve system spring (28), valve systen body large assembly ring (22), plug body-piston pipe sealing o-ring (13), valve system body-plug body sealing o-ring (23), plug body air channel (25), valve system body valve groove (35), valve system body (26), valve system body small assembly ring (27), plug body valve system groove (34), valve sealing lip (31), rectangle ring air channel (32) and the rectangle ring (33).

3. An internal ventilated diaphragm-piston spring brake actuator (1) according to Claim 1 or 2, **characterized in that** purging (discharge) of the pressurized air formed in the power spring section (37) during winding up of power spring (11) to service chamber (3) is performed by passing through power spring section (37), piston pipe internal volume (36), valve system body air channel (30), valve system body valve groove (35), plug body valve system groove (34), plug body air channel (25) and piston pipe air channel (24), respectively.

4. An internal ventilated diaphragm-piston spring brake actuator (1) according to Claim 3, **characterized in that** the balancing of the vacuum formed in the power spring section (37) during switching of the vehicle from driving position to parking position by transfer of atmospheric pressure in the service chamber (3) to power spring section (37) is performed by passing through the service chamber (3), piston pipe air channel (24), plug body air channel (25), plug body valve system groove (34), valve system body valve groove (35), valve system body air channel (30) and piston pipe internal volume (36), respectively.

5. An internal ventilated diaphragm-piston spring brake actuator (1) according to Claim 3, **characterized in that,** when the piston pipe air channel (24) is above the adapter plate (38) - piston pipe (7) adapter plate bearing, blocking passage of pressurized air that may form in the service chamber (3) to the power spring section (37) is ensured by reaching to service chamber (3), piston pipe air channel (24), plug body air channel (25) and plug body valve system groove (34), pushing the valve (29) and the valve system spring (28) downward and connecting the valve sealing lip (31) to valve system body (26).

6. An internal ventilated diaphragm-piston spring brake actuator (1) according to Claims 1 and 2, **characterized in that** the adapter plate bearing and sealing between the adapter plate (38) and the piston pipe (7) is ensured by two o-rings (18) and one adapter plate center guide ring (16).

7. An internal ventilated diaphragm-piston spring brake actuator (1) according to Claims 1 and 2, **characterized in that** when the piston pipe air channel (24) enters between two o-rings (18) in the adapter plate (38) - piston pipe (7) adapter plate bearing, discharge of the pressurized air in the spring chamber (37) to service chamber (3) is ensured by passing through the power spring section (37), piston pipe internal volume (36), valve system body air channel (30), valve system body valve groove (35), plug body valve system groove (34), rectangle wing air channel (32) and the rectangle ring (33).

8. An internal ventilated diaphragm-piston spring brake actuator (1) according to Claims 1 and 2, **characterized in that** when the piston pipe air channel (24) enters between the two o-ring (18) in the adapter plate (38) - piston pipe (7) adapter plate bearing, blocking passage of pressurized air that may form in the service chamber (3) to the valve system is ensured by the rectangle ring (33) having the design that allows air passage only to the service chamber (3).

9. Assembly method of an internal ventilated diaphragm-piston spring brake actuator (1) according to Claim1, **characterized in that** assembly of valve system integrated piston pipe plug (6) in the rectangle ring implemented version comprises the steps of;
• Placing the power spring (11) and the piston (8) into the spring body (4),
• Winding up of the power spring (11) by the aid of a press,
• Fixing the power spring (11) and the piston (8) by the release bolt (39),
• Placing the adapter plate (38) onto the spring body (4) and performing the connection of adapter plate (38) - spring body (4),
• The valve system integrated piston pipe plug (6) is mounted onto the piston pipe (7) by the aid of a press.

10. Disassembly method of an internal ventilated diaphragm-piston spring brake actuator (1) according to Claim1, **characterized in that** the disassembly of valve system integrated piston pipe plug (6) in the rectangle ring implemented version comprises the steps of;
• Removing the service body (2),
• While the piston (8) is at top position when the pressurized air in the spring chamber (5) is purged, placing vertically cut right and left bushings (40, 41) on the adapter plate (38) such that they surround the piston pipe (7),
• Moving the piston (8) is downward by supplying pressurized air into the spring chamber (5),
By the reverse impulse force of the pressurized air on the piston (8) and by the reaction force of the right and left bushings (40, 41) on the piston pipe plug (6) towards disassembly direction, releasing the plug body locking assembly form (20) from the piston pipe locking assembly form (21).

## Patentansprüche

1. Innenbelüfteter Membran-Kolbenfederbremsaktuator (1), der ein Innenbelüftungssystem für in pneumatischen Bremssystemen verwendete Membran-Kolbenfederbremsaktuatoren implementiert, umfassend ein Kolbenrohr (7) mit einer Verriegelungszusammenbauform des Kolbenrohrs (21) und einen Kolbenrohrstopfen (6) mit einem Ventilsystem mit Verriegelungszusammenbauform des Stopfenkörper (20), wobei der Kolbenrohrstopfen (6) einen rechteckigen Ring (33) darauf umfasst und ein Ventilsystem aufweist, das zum Ausgleich von Vakuum und Druck strukturiert ist, die in dem Kraftfederabschnitt (37) durch die Servicekammer (3) gebildet werden, **dadurch gekennzeichnet, dass**
der Kolbenrohrstopfen (6) mit einem Stopfenkörper (12), der mit der Verriegelungszusammenbauform des Stopfenkörpers (20) und der Verriegelungszusammenbauform des Kolbenrohrs (21) durch einen formabhängigen Einsteckvorgang verbunden ist, auf das Kolbenrohr (7) montiert wird.

2. Innenbelüfteter Membran-Kolbenfederbremsaktuator (1) nach Anspruch 1, **dadurch gekennzeichnet, dass dadurch gekennzeichnet, dass** der Kolbenrohrstopfen (6) mit dem Ventilsystem umfassend einen Stopfenkörper (12), eine Verschlusszusammenbauform des Stopfenkörpers (20), einen Luftkanal des Ventilsystemkörpers (30), ein Ventil (29), eine Ventilsystemfeder (28), einen großen Zusammenbauring des Ventilkörpers (22), einen Dicht-O-Ring des Stopfenkörper-Kolbenrohrs (13), einen Dicht-O-Ring des Ventilsystemkörper-Stopfenkörpers (23), einen Luftkanal des Stopfenkörpers (25), eine Ventilnut des Ventilsystemkörpers (35), einen Ventilsystemkörper (26), einen Zusammenbauring des Ventilsystemkörpers (27), eine Ventilsystemnut des Stopfenkörpers (34), eine Ventildichtlippe (31), einen Rechteckring-Luftkanal (32) und den Rechteckring (33).

3. Innenbelüfteter Membran-Kolbenfederbremsaktuator (1) nach Anspruch 1 oder 2, **dadurch gekennzeichnet, dass** das Spülen (Ablassen) der im Kraftfederabschnitt (37) während des Aufwickelns der Kraftfeder (11) zur Servicekammer (3) gebildeten Druckluft durch Durchlaufen des Kraftfederabschnitts (37), des Innenvolumens des Kolbenrohrs (36), des Luftkanals des Ventilsystemkörpers (30), der Ventilnut des Ventilsystemkörpers (35), der Ventilsystemnut des Stopfenkörpers (34), des Luftkanals des Stopfenkörpers (25) bzw. des Luftkanals des Kolbenrohr (24) erfolgt.

4. Innenbelüfteter Membran-Kolbenfederbremsaktuator (1) nach Anspruch 3, **dadurch gekennzeichnet, dass** der Ausgleich des Unterdrucks, der in dem Kraftfederabschnitt (37) während des Umschaltens des Fahrzeugs von der Fahrstellung in die Parkstellung durch Übertragung des atmosphärischen Drucks in der Servicekammer (3) auf den Kraftfederabschnitt (37) gebildet wird, durch Durchlaufen der Servicekammer (3), des Luftkanals des Kolbenrohrs (24), des Luftkanals des Stopfenkörpers (25), der Ventilsystemnut des Stopfenkörpers (34), der Ventilnut des Ventilsystemkörpers (35), des Luftkanals des Ventilsystemkörpers (30) bzw. des Innenvolumens des Kolbenrohrs (36) erfolgt.

5. Innenbelüfteter Membran-Kolbenfederbremsaktuator (1) nach Anspruch 3, **dadurch gekennzeichnet, dass,** wenn sich der Luftkanal des Kolbenrohrs (24) über dem Adapterplattenlager (38) - Kolbenrohr (7) befindet, der Durchgang von Druckluft, die sich in der Servicekammer (3) bilden kann, zum Kraftfederabschnitt (37) blockiert wird, indem die Servicekammer (3), der Luftkanal des Kolbenrohrs (24), der Luftkanal des Stopfenkörpers (25) und die Ventilsystemnut des Stopfenkörpers (34) erreicht werden, das Ventil (29) und die Ventilsystemfeder (28) nach unten gedrückt werden und die Ventildichtlippe (31) mit dem Ventilsystemkörper (26) verbunden wird.

6. Innenbelüfteter Membran-Kolbenfederbremsaktuator (1) nach Ansprüche 1 und 2, **dadurch gekennzeichnet, dass** die Adapterplattenlagerung und die Abdichtung zwischen der Adapterplatte (38) und dem Kolbenrohr (7) durch zwei O-Ringe (18) und einen Adapterplatten-Mittelführungsring (16) gewährleistet ist.

7. Innenbelüfteter Membran-Kolbenfederbremsaktuator (1) nach Ansprüche 1 und 2, **dadurch gekennzeichnet, dass,** wenn der Luftkanal des Kolbenrohrs (24) zwischen zwei O-Ringe (18) in der Adapterplatte (38) - Adapterplattenlager des Kolbenrohrs (7) eintritt, die Entladung der Druckluft in der Federkammer (37) in die Servicekammer (3) sichergestellt wird, indem sie durch den Kraftfederabschnitt (37), das Innenvolumen des Kolbenrohrs (36), den Luftkanal des Ventilsystemkörpers (30), die Ventilnut des Ventilsystemkörpers (35), die Ventilsystemnut des Stopfenkörpers (34), den Rechteckflügel-Luftkanal (32) und den Rechteckring (33) hindurchgeht.

8. Innenbelüfteter Membran-Kolbenfederbremsaktuator (1) nach Ansprüche 1 und 2, **dadurch gekennzeichnet, dass,** wenn der Luftkanal des Kolbenrohrs (24) zwischen die beiden O-Ringe (18) in der Adapterplatte (38) - Adapterplattenlager des Kolbenrohrs (7) eintritt, die Blockierung des Durchgangs von Druckluft, die sich in der Servicekammer (3) bilden kann, zum Ventilsystem durch den rechteckigen Ring (33) sichergestellt wird, der so gestaltet ist, dass er den Luftdurchgang nur zur Servicekammer (3) zulässt.

9. Verfahren zum Zusammenbau eines innenbelüfteten Membran-Kolbenfederbremsaktuators (1) nach Anspruch 1, **dadurch gekennzeichnet, dass** der Zusammenbau des im Ventilsystem integrierten Kolbenrohrstopfens (6) in der Rechteckringausführung die Schritte umfasst
• Platzieren der Kraftfeder (11) und des Kolbens (8) in den Federkörper (4),
• Aufwickeln der Kraftfeder (11) mit Hilfe einer Presse,
• Fixieren der Kraftfeder (11) und des Kolbens (8) mit dem Auslösebolzen (39),
• Platzieren der Adapterplatte (38) auf den Federkörper (4) und Herstellen der Verbindung von Adapterplatte (38) - Federkörper (4),
• Der im Ventilsystem integrierte Kolbenrohrstopfen (6) wird mit Hilfe einer Presse auf das Kolbenrohr (7) montiert.

10. Verfahren zum Abbau eines innenbelüfteten Membran-Kolbenfederbremsaktuators (1) nach Anspruch 1, **dadurch gekennzeichnet, dass** der Abbau des ventilsystemintegrierten Kolbenrohrstopfens (6) in der Rechteckringausführung die folgenden Schritte umfasst;
• Entfernen des Servicekörpers (2),
• Während sich der Kolben (8) in der oberen Position befindet, wenn die Druckluft in der Federkammer (5) entlüftet ist, werden die rechte und linke Buchse (40, 41) auf der Adapterplatte (38) vertikal geschnitten, so dass sie das Kolbenrohr (7) umgeben,
• Die Bewegung des Kolbens (8) ist nach unten, indem du Druckluft in die Federkammer (5) zuführst,
Durch die umgekehrte Impulskraft der Druckluft auf den Kolben (8) und durch die Reaktionskraft der rechten und linken Buchsen (40, 41) auf den Kolbenrohrstopfen (6) in Abbaurichtung, wird die Verriegelungszusammenbauform des Stopfenkörpers (20) von der Verriegelungszusammenbau des Kolbenrohrs (21) gelöst.

## Revendications

1. Actionneur de frein à ressort de membrane-piston à ventilation interne (1), mettant en oeuvre un système de ventilation interne pour les actionneurs de frein à ressort de membrane-piston utilisés dans les systèmes de freinage pneumatiques, comprenant un tuyau du piston (7) ayant une forme d'assemblage de verrouillage du tuyau du piston (21) et un bouchon du tuyau du piston (6) ayant un système de soupape avec une forme d'assemblage de verrouillage du corps du bouchon (20), dans lequel ledit bouchon du tuyau du piston (6) comprend un anneau rectangulaire (33) sur celui-ci et ayant un système de soupape structuré pour équilibrer le vide et la pression formés dans la section de ressort de puissance (37) par la chambre de service (3), **caractérisé en ce que** le bouchon du tuyau du piston (6) est monté sur le tuyau du piston (7) avec un corps du bouchon (12) connecté à la forme d'assemblage de verrouillage du corps du bouchon (20) et la forme d'assemblage de verrouillage du tuyau du piston (21) par une opération d'emboîtement dépendant de la forme.

2. Actionneur de frein à ressort de membrane-piston à ventilation interne (1) selon la revendication 1, **caractérisé en ce que** le bouchon du tuyau du piston (6) ayant le système de soupape comprend le corps du bouchon (12), la forme d'assemblage de verrouillage du corps du bouchon (20), le canal d'air du corps du système de soupape (30), la soupape (29), le ressort du système de soupape (28), le grand anneau d'assemblage du corps du système de soupape (22), le joint torique d'étanchéité du corps du bouchon-tuyau du piston (13), le joint torique d'étanchéité du corps du système de soupape-corps du bouchon (23), le canal d'air du corps du bouchon (25), la rainure de soupape du corps du système de soupape (35), le corps du système de soupape (26), le petit anneau d'assemblage du corps du système de soupape (27), la rainure du système de soupape du corps du bouchon (34), la lèvre d'étanchéité de soupape (31), le canal d'air de l'anneau rectangulaire (32) et l'anneau rectangulaire (33).

3. Actionneur de frein à ressort de membrane-piston à ventilation interne (1) selon la revendication 1 ou 2, **caractérisé en ce que** la purge (décharge) de l'air sous pression formé dans la section du ressort de puissance (37) pendant l'enroulement du ressort de puissance (11) vers la chambre de service (3) est effectuée en passant par la section du ressort de puissance (37), le volume interne du tuyau du piston (36), le canal d'air du corps du système de soupape (30), la rainure de soupape du corps du système de soupape (35), la rainure du système de soupape du corps du bouchon (34), le canal d'air du corps du bouchon (25) et le canal d'air du tuyau du piston (24), respectivement.

4. Actionneur de frein à ressort de membrane-piston à ventilation interne (1) selon la revendication 3, **caractérisé en ce que** l'équilibrage du vide formé dans la section du ressort de puissance (37) lors du passage du véhicule de la position de conduite à la position de stationnement par transfert de la pression atmosphérique dans la chambre de service (3) à la section du ressort de puissance (37) est effectué en passant par la chambre de service (3), le canal d'air du tuyau du piston (24), le canal d'air du corps du bouchon (25), la rainure du système de soupape du corps du bouchon (34), la rainure de soupape du corps du système de soupape (35), le canal d'air du corps du système de soupape (30) et le volume interne du tuyau du piston (36), respectivement.

5. Actionneur de frein à ressort de membrane-piston à ventilation interne (1) selon la revendication 3, **caractérisé en ce que,** lorsque le canal d'air du tuyau du piston (24) est au-dessus du palier de la plaque d'adaptation (38) - la plaque d'adaptation du tuyau du piston (7), le blocage du passage de l'air sous pression qui peut se former dans la chambre de service (3) vers la section du ressort de puissance (37) est assuré par l'atteinte de la chambre de service (3), le canal d'air du tuyau du piston (24), le canal d'air du corps du bouchon (25) et la rainure du système de soupape du corps du bouchon (34), en poussant la soupape (29) et le ressort du système de soupape (28) vers le bas et en connectant la lèvre d'étanchéité de soupape (31) au corps du système de soupape (26).

6. Actionneur de frein à ressort de membrane-piston à ventilation interne (1) selon les revendications 1 et 2, **caractérisé en ce que** la palier de la plaque d'adaptation et l'étanchéité entre la plaque d'adaptation (38) et le tuyau du piston (7) sont assurés par deux joints toriques (18) et un anneau de guidage centrale de la plaque d'adaptation (16).

7. Actionneur de frein à ressort de membrane-piston à ventilation interne (1) selon les revendications 1 et 2, **caractérisé en ce que** lorsque le canal d'air du tuyau du piston (24) pénètre entre deux joints toriques (18) dans le palier de la plaque d'adaptation (38) - la plaque d'adaptation du tuyau du piston (7), l'évacuation de l'air sous pression dans la chambre du ressort (37) vers la chambre de service (3) est assurée en passant par la section du ressort de puissance (37), le volume interne du tuyau du piston (36), le canal d'air du corps du système de soupape (30), la rainure de soupape du corps du système de soupape (35), la rainure du système de soupape du corps du bouchon (34), le canal d'air de l'aile rectangulaire (32) et l'anneau rectangulaire (33).

8. Actionneur de frein à ressort de membrane-piston à ventilation interne (1) selon les revendications 1 et 2, **caractérisé en ce que,** lorsque le canal d'air du tuyau du piston (24) pénètre entre les deux joints toriques (18) dans le palier de la plaque d'adaptation (38) - la plaque d'adaptation du tuyau du piston (7), le blocage du passage de l'air sous pression qui peut se former dans la chambre de service (3) vers le système de soupape est assuré par l'anneau rectangulaire (33) dont la conception ne permet le passage de l'air que dans la chambre de service (3).

9. Procédé d'assemblage d'un actionneur de frein à ressort de membrane-piston à ventilation interne (1) selon la revendication 1, **caractérisé en ce que** l'assemblage du bouchon du tuyau du piston (6) intégré avec le système de soupape dans la version à anneau rectangulaire comprend les étapes suivantes ;
• Placer le ressort de puissance (11) et le piston (8) dans le corps du ressort (4),
• Enrouler le ressort de puissance (11) à l'aide d'une presse,
• Fixer le ressort de puissance (11) et le piston (8) par le boulon de déverrouillage (39),
• Placer la plaque d'adaptation (38) sur le corps de ressort (4) et effectuer la connexion plaque d'adaptation (38) - corps de ressort (4),
• Le bouchon du tuyau du piston (6) intégré au système de soupape est monté sur le tuyau du piston (7) à l'aide d'une presse.

10. Procédé de démontage d'un actionneur de frein à ressort de membrane-piston à ventilation interne (1) selon la revendication 1, **caractérisé en ce que** le démontage du bouchon du tuyau du piston (6) intégré avec le système de soupape dans la version à anneau rectangulaire comprend les étapes suivantes ;
• Démonter le corps de service (2),
• Alors que le piston (8) est en position haute lorsque l'air sous pression dans la chambre du ressort (5) est purgé, placer les bagues droite et gauche (40, 41) coupées verticalement sur la plaque d'adaptation (38) de manière à ce qu'elles entourent le tuyau du piston (7),
• Déplacer le piston (8) est vers le bas en fournissant de l'air sous pression dans la chambre du ressort (5),
Par la force d'impulsion inverse de l'air sous pression sur le piston (8) et par la force de réaction des bagues droite et gauche (40, 41) sur le bouchon du tuyau du piston (6) dans le sens du démontage, libérant la forme d'assemblage de verrouillage du corps du bouchon (20) de la forme d'assemblage de verrouillage du tuyau du piston (21).
